# EUROPEAN PATENT APPLICATION

(11) **EP 0 719 497 A1**
(43) Date of publication of application: **03.07.1996**
(21) Application number: 95203668.9
(22) Date of filing: 28.12.1995
(51) Int. Cl.: A01K 5/00, A01F 25/20

(54) **Device for lifting and moving a block of material**

(30) Priority: 30.12.1994 NL 9402245
(71) Applicant: Takke Breukelen B.V., NL-3621 MX Breukelen (NL)
(72) Inventor: Nagel, Pieter Jacobus, NL-1391 HJ Abcoude (NL)
(74) Representative: de Bruijn, Leendert C.

(57) **Abstract**

Device for lifting and moving a block of material, such as fodder, from a larger quantity of cut silaged material. The device encloses the block of material in the longitudinal direction, so that this device can be of relatively narrow construction in order to obtain optimum manoeuvrability. The device consists of gripper means (3) which, from enclosing arms (2), grasp the block of material at the sides from below and lift it. Scraper means (12) can be provided at the top in order, for example, to shred a block of silage.

## Description

The present invention relates to an device according to the preamble of Claim 1.

An device of this type is disclosed in German Offenlegungsschrift 3 013 316.

This device consists of a frame which is mounted on four wheels and is open on one side for accommodating a block of material within it. The device is provided with fork tines, which can be moved in the vertical direction in the manner of a fork-lift truck. With an device of this type it is not possible to grasp a block of silage unless this block is on a pallet or the like.

Other pallet trucks too are used for lifting and moving blocks. Such pallet trucks are not very efficient for moving over relatively large distances. In cattle farming in particular, that is why farmers make use of tractors for driving a block of fodder, which has been detached from silage material by a silage cutter, into the cattle shed for the animals.

However, this has the disadvantage that if the passageways in the cattle sheds are relatively narrow it is not possible, using a tractor, to reach all the positions where the fodder has to be dispensed. In such cases resort is made to wheelbarrows and similar manually operated means.

Working practices of this type no longer suffice because requirements in respect of the stress to which a person, and more particularly the back, may be subjected while working are becoming increasingly stringent and efficiency has to be increased even further.

When tractors are used, the block is generally loaded transversely onto the tractor, that is to say with the longitudinal direction transverse to the direction of movement.

If relatively narrow trucks are used, such as pallet trucks, the fact that lifting is carried out only from the underside gives rise to unstable fixing of a block of material. With this procedure, moreover, a pallet is always needed, with all the handling problems associated with this. In particular, this gives rise to problems if portions have to be taken from the block of material, for example for supplying to the various animals.

The aim of the present invention is to provide an device which makes it possible to transport blocks of material through relatively narrow passageways, with which device such a block of material is firmly held.

This aim is achieved by the characterising features of Claim 1.

With the aid of the device according to the invention, it is possible to accommodate the block of fodder in the device in the longitudinal direction. The device itself is hardly any wider than the width of the block of fodder. Only the elongated parts or enclosing arms extend beyond the block of fodder. Because silage cutters cut blocks of standardised width, the enclosing arms can be arranged a fixed width apart. Incidentally, because of the presence of the gripper means, some variation in the width of the silage blocks does not present any problem. This variation is accommodated by this gripper means. By positioning the blocks in the longitudinal direction, these blocks can be moved and set down in relatively narrow passageways. Because the blocks are firmly gripped, it is possible, while the blocks are in this gripped position, to remove material therefrom for feeding the individual animals.

Using the gripper means according to the invention it is possible to grasp, to carry and to lift blocks of material without the use of pallets or the like.

This is in contrast to constructions with which fork tines are used.

The gripper means can operate in any manner known from the prior art. For instance, it is possible for gripper rods to move out from the enclosing arms.

However, according to an advantageous embodiment of the invention the gripper means are hingeably mounted on the enclosing arms. That is to say that in the non-operating position, the gripper means are arranged such that they extend along the longitudinal surface of the enclosing arms, whilst, in order to operate, this gripper means are turned upwards in order to grasp the block of material between them.

The gripper means can be constructed in any conceivable manner, such as with prongs and plates. The construction depends, in particular, on the product which has to be moved.

As already indicated above, using the device according to the invention it is possible to grasp the blocks in a stable manner. As a result it also becomes possible to effect removal of material from the blocks by mechanical means. To this end, according to a particular embodiment of the invention, a mast is provided which has scraper means which engage on the top of the block. This scraper means can comprise any type of construction known from the prior art. These means can act either in the transverse or the longitudinal direction.

The scraper means preferably consist of a series of scraper bars connected by a loop-shaped conveyor mechanism.

In order to provide for compensation for the reduction in the height of the block when the scraper means are in operation, this scraper means are preferably arranged such that their height is adjustable with respect to the mast.

If the block as such is not particularly firm, there is a risk that when the scraper means are used an inadmissibly large portion will break off in an undesired position. In order to prevent this, guide means are present for lateral enclosure of the block of material. This guide means are preferably arranged at a fixed distance away from the scraper means, such that when the scraper means are lowered the guide means also move downwards with them.

For optimum handling of the block, the mast described above, to which the scraper means are attached, is constructed such that it is both tiltable and can be moved in a translational manner.

The invention will be explained in more detail below with reference to an illustrative embodiment shown in the drawing. In the drawing:
Fig. 1 shows a perspective side view of the device according to the invention in the position for lifting a block of material;
Fig. 2 shows a side view of the device in the position for storage and transport without the presence of a block of material;
Fig. 3 shows the device in the position shown in Fig. 1, but from the end from which a block of material is picked up;
Fig. 4 shows a side view of the device according to the invention, with tilted mast and partially metered block of material;
Fig. 5 shows a detail of the operating mechanism for the gripper means, and
Fig. 6 shows a detail of further embodiment of the device according to the invention.

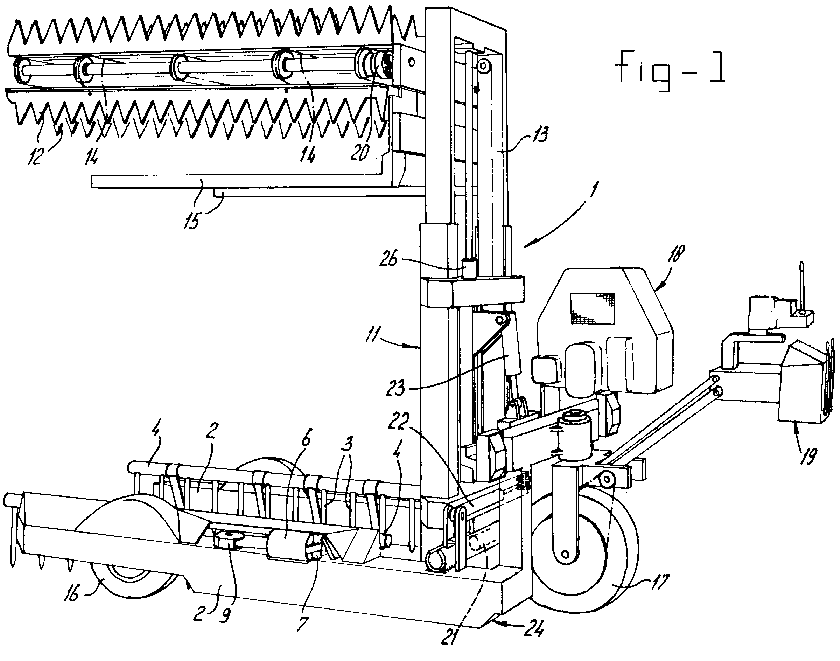

In Fig. 1 the device according to the invention is indicated in its entirety by 1. This device consists of a frame 24 provided with two enclosing arms 2, which extend parallel to one another. Non-steerable wheels 16 are located at the free ends of these bars, whilst a steerable wheel 17 is located at the end where these arms are connected to one another. The device 1 is provided with a drive and hydraulic assembly, which is not shown in detail and is indicated in its entirety by 18. This device 18 generates hydraulic pressure and provides the drive for wheel 17. Other embodiments are possible for example one wherein the hydraulic drive is integrated in wheel 17, 19 indicates a control unit for controlling the various components..

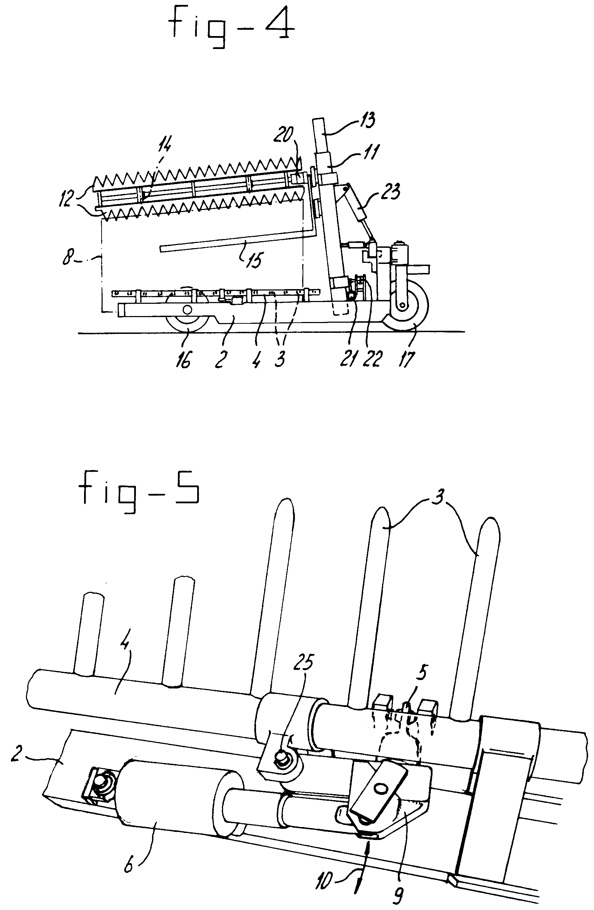

It can be seen from Fig. 5 that the enclosing arms 2 are provided with rods 4 hingeably mounted therein, on which rods 4 gripper prongs 3 are fitted. Hydraulic cylinder 6, which can be operated via control unit 19, is at one end hingeably connected to enclosing arm 2, whilst at the other end the piston end is hingeably connected to a hinge plate 9, which at the other end is hingeably connected at hinge point 25 to enclosing arm 2. Hinge plate 9 is furthermore connected to a coupling rod 5, which, in turn, engages on a protruding part of rod 4. By moving hydraulic cylinder 6 inwards and outwards, the lug of the piston thereof will make the movement which is indicated by arrow 10, which is translated into a hinged turning movement of gripper prongs 3. Control can also be realised from control unit 19 through bowden cables which act on hydraulic controls positioned on a well protected location.

A mast 11 is also mounted on frame 24. This mast 11 is connected to the frame via a tiltable-slidable link. The latter is indicated by 21. The mast can be moved from side to side by means of translational cylinder 22 and the mast can tilt with the aid of cylinder 23. This movement as well is controlled by operating elements on control unit 19. Of course the mast can be rigidly fixed to the frame.

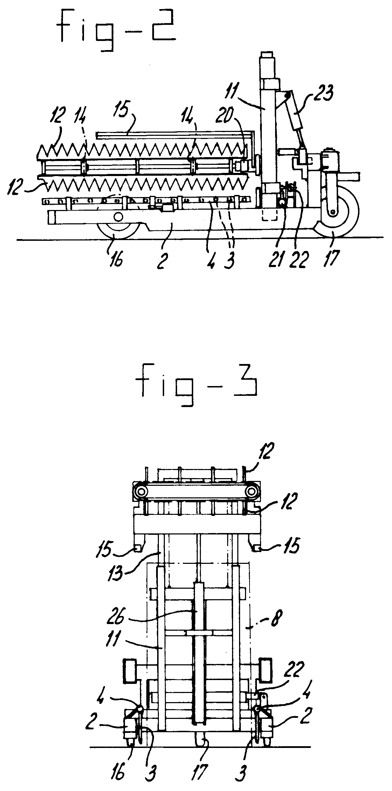

An auxiliary frame 13 is fitted to mast 11. With the aid of cylinder 26, this auxiliary frame 13 can be moved upwards and downwards with respect to the mast. Two guide tines 15 are arranged on this auxiliary frame 13, for accommodating the block of material between them. These tines 15 can be folded up, as can be seen from Fig. 2. A scraper mechanism is arranged above these tines. This scraper mechanism consists of a number of scraper bars 12 which are located some distance apart and are connected to one another by chains 14 to form a loop-like whole. A hydraulic motor 20 can move the "conveyor belt" thus produced.

A block of material to be lifted is indicated by 8 in the various figures.

The device described above functions as follows.

If silage has to be taken from a store, a block is first cut with the aid of a silage cutter known from the prior art. The device is then driven into the store, the enclosing arms extending either side of the longitudinal sides of the block. After driving in to the maximum extent with the scraper means in the highest position, as shown in Fig. 1, the gripper prongs, which when driving in are positioned folded back against the enclosing arm, are hinged outwards and upwards to grasp the block of material and lift it somewhat from below. The device, together with the block of material, is then moved out of the store. Because of the narrow width and the three-wheel construction with the third wheel as steering wheel, the device, together with the block of material, can, on the one hand, be moved in a particularly small turning circle and, on the other hand, can be moved through particularly narrow passageways. Thus, it is possible to use this device in the majority of cattle sheds.

After arriving at the place of use, either the block can simply be put down by folding down the gripper prongs again and driving out the device according to the invention, or a portion of the material can be metered.

In the latter case, the series of scraper bars 12 are brought into engagement with the top of the block by moving the auxiliary frame 13 downwards. By then driving the motor 20, the material can be dispensed either at the one side of the device or at the other side of the device. The presence of the guide tines 15 prevents inadmissibly large lumps of material from breaking off. As the height of the block decreases further, this guide tines move downwards together with the scraper bars, controlled by cylinder 26. If the final portion of the block has to be distributed, the tines 15 are folded above the scraper means, so that the scraper means are able to distribute the block without leaving any residue.

In order to distribute either from the front of the block or from the rear of the block, the mast 11 is of tiltable construction. Further manoeuvrability is obtained by making it possible to move the mast in a translational manner in the direction transverse to the direction of movement.

In Fig. 2 the device according to the invention is shown in the storage and transport position, shown without the presence of a block of material. It can be seen that a particularly compact device is obtained.

The opening for accommodating the blocks 8 can be seen in particular from Fig. 3, whilst Fig. 4 shows the tiltable and translational character of mast 11.

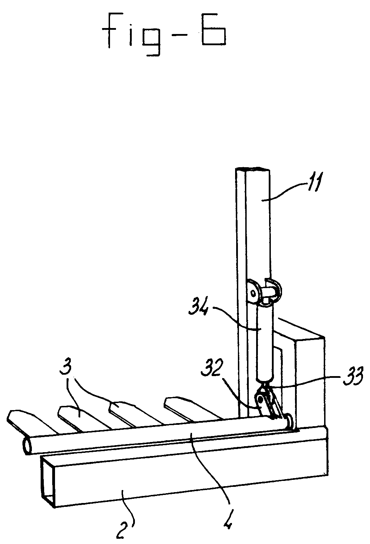

A further embodiment of the invention is shown in Fig. 6. In this embodiment control of the tilting movement of rods 4 is not any longer effected through the mechanism shown in Fig. 5.

In this embodiment rod 4 is provided with lugs 32 on which piston 33 of a piston-cylinder engages. The cylinder 34 of this assembly is connected on the other hand to mast 11.

It will be understood that, with the construction described above, the lifting and dispensing of fodder material can be fully mechanised, even during use in narrow passageways and restricted areas. This signifies an appreciable improvement in working conditions.

It will be understood that the device shown here can be used, with modifications obvious to a person skilled in the art, for moving other types of material. Moreover, operation of the various components can be carried out by other means obvious to a person skilled in the art on reading this description.

These modifications are all considered to fall within the scope of the appended claims.

## Claims

1. Device (1) for lifting and moving a block of material, such as a block of fodder from a silage pit, comprising a frame (24) provided with wheels (16, 17) and a drive (18), which frame (24) comprises two spaced elongated parts for accommodating the block of material between them, means being provided for grasping, carrying and lifting this block of material, characterised in that these means comprise gripper means (3) which are movable from the elongated parts in a direction essentially perpendicular thereto.

2. Device according to Claim 1, wherein the gripper means are hingeably mounted on the elongated parts.

3. Device according to one of the preceding claims, wherein the gripper means comprise prongs (3).

4. Device according to one of the preceding claims, wherein the gripper means comprise plates.

5. Device according to one of the preceding claims, comprising a mast (11) provided with scraper means which engage on the top of the block of material.

6. Device according to Claim 4, wherein this scraper means comprise a series of scraper bars (12) connected by a loop-shaped conveyor mechanism.

7. Device according to one of Claims 5 or 6, wherein the height of these scraper means is adjustable with respect to the mast.

8. Device according to one of the preceding Claims 5 - 7, wherein these scraper means are mounted such that they are movable sideways as a whole with respect to the frame.

9. Device according to one of the preceding claims, wherein (fold-up) guide means (15) are provided for enclosing a block of material at the sides.

10. Device according to Claims 7 and 9, wherein snaid guide means are arranged at a fixed distance away from the scraper means.
